# FASCICULE DE BREVET EUROPEEN

(11) **EP 1 179 915 B1**
(45) Date de publication et mention de la délivrance du brevet: **03.02.2016**
(21) Numéro de dépôt: 01402103.4
(22) Date de dépôt: 03.08.2001
(51) Int. Cl.: H04L 12/771, H04L 12/24

(54) **Routeur à carte microprocesseur**
Router mit einer Chipkarte
Router with a smart card

(30) Priorité: 10.08.2000 FR 0010515
(43) Date de publication de la demande: 13.02.2002
(73) Titulaire: SAGEMCOM BROADBAND SAS, 92500 Rueil Malmaison (FR)
(72) Inventeur: Geheniau, Frédéric, 92500 Rueil Malmaison (FR); Lecouey, Thierry, 92500 Rueil Malmaison (FR)
(74) Mandataire: Fruchard, Guy

(56) Documents cités:
- WO-A-96/01456
- FR-A- 2 783 660
- JANDER M: "ROUTER MANAGEMENT GOES BEYOND PRETTY PICTURES. ÖNEW SOFTWARE TOOLS PACKAGES ARE BRINGING MORE SUBSTANCE TO ROUTER MANAGEMENT UNDER SNMP" DATA COMMUNICATIONS,US,MCGRAW HILL. NEW YORK, vol. 22, no. 8, 21 mai 1993 (1993-05-21), pages 47-48,50-51, XP000367740 ISSN: 0363-6399

## Description

L'invention concerne un routeur équipé d'un lecteur de carte à microprocesseur.

Les routeurs sont des équipements informatiques destinés à diriger les flux de communications sur un réseau, ainsi qu'à transmettre à une plate-forme de gestion des informations concernant les événements survenant à l'occasion du fonctionnement du réseau.

Les routeurs sont en général configurés sur site par un technicien lors de leur mise en place. A cette occasion, le technicien installe les options logicielles choisies par le client. Cette installation nécessite donc le déplacement du technicien sur le site. Cette procédure est rappelée notamment dans l'article de Mary Jander dans la revue Data Communications du 21 mai 1993. Cet article énonce également les fonctions mises en oeuvre par les outils existants qui sont essentiellement des outils logiciels facilitant le travail du technicien mais ne permettant pas de supprimer son intervention.

On connaît par ailleurs du document WO 96/01456 un dispositif permettant d'assurer une configuration par défaut d'une imprimante reliée à plusieurs stations utilisatrices employant différentes configurations. L'imprimante est reliée à un serveur et comprend un circuit de commande de configuration par défaut. Lors du lancement d'un travail d'impression, le circuit assure la connexion avec une adresse d'un serveur à laquelle est associée une configuration requise. Un tel dispositif reste complexe à mettre en oeuvre et ne permet pas d'assurer une configuration unique de l'imprimante.

Selon l'invention, pour éviter cet inconvénient des routeurs actuels, on prévoit un routeur comportant un processeur destiné à assurer des transmissions sur un réseau de communications au moyen d'une interface identifiée par une adresse affectée en usine, équipé d'un lecteur pour associer le routeur à une carte à microprocesseur identifiée par ladite adresse de l'interface du routeur inscrite dans la carte à microprocesseur, le routeur étant adapté à être configuré par une procédure, lancée par la carte à microprocesseur, de mise en service du routeur en relation avec au moins un paramètre de configuration du routeur contenu dans la carte à microprocesseur.

Ainsi, la carte à microprocesseur se combine avec le routeur pour valider dans celui-ci des options logicielles achetées par le client, au moyen du ou des paramètres de configuration inscrits en mémoire dans la carte à microprocesseur.

Selon une caractéristique avantageuse, l'adresse de l'interface du routeur est inscrite de façon irréversible dans la mémoire de la carte à microprocesseur lors de sa première introduction dans le lecteur du routeur.

Ainsi, la carte contenant les options de configuration peut au départ être associée à l'un quelconque des routeurs du réseau, mais est irrémédiablement associée au routeur choisi lors de sa première utilisation. Il n'est donc pas possible d'utiliser une même carte pour configurer plusieurs routeurs.

Avantageusement, la carte à microprocesseur contient des procédures de test du routeur.

Il est ainsi possible de vérifier que la configuration choisie est bien installée.

Selon un autre aspect avantageux, la configuration active du routeur est sauvegardée en mémoire dans la carte à microprocesseur.

Ainsi, en cas de panne, le routeur est directement reconfiguré selon une configuration identique à la configuration antérieure sans qu'il soit nécessaire de relancer le processus d'installation du logiciel.

Selon un autre aspect avantageux, la carte à microprocesseur contient l'adresse d'accès à distance d'un gestionnaire de réseau.

Grâce à cette adresse, un complément de configuration ou une reconfiguration peut être effectué à distance par le gestionnaire du réseau.

Avantageusement, la carte à microprocesseur peut contenir des paramètres limitant l'accès à certains fichiers du routeur.

On pourra ainsi produire une carte différente pour chaque intervenant (l'utilisateur, le producteur, le distributeur...), sélectionnant pour celui-ci les fichiers du routeur qu'il est autorisé à consulter.

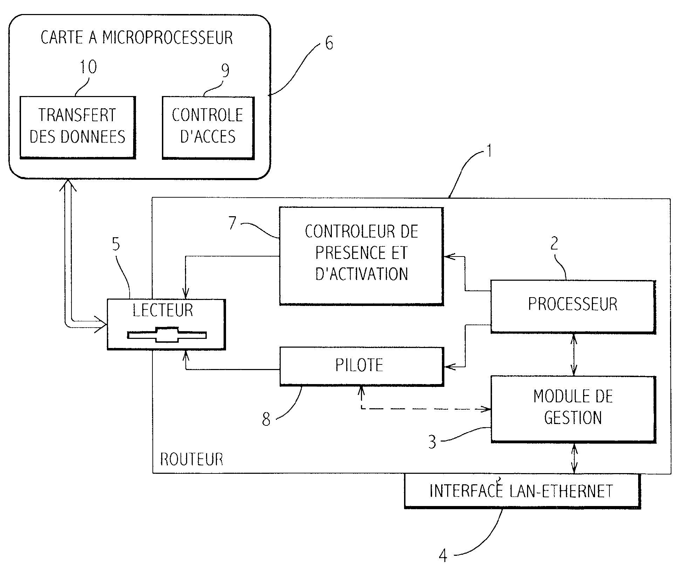

D'autres caractéristiques et avantages de l'invention ressortiront à la lecture de la description qui suit de la figure unique ci-jointe illustrant selon un schéma par blocs un mode de réalisation particulier non limitatif de l'invention.

En référence à cette figure, un routeur 1 est muni d'un processeur 2 disposé pour commander un module de gestion 3 qui administre, dirige et régule des communications sur un réseau informatique au moyen d'une interface 4 dite LAN-ETHERNET. Le routeur 1 est identifié dans le réseau de communications dans lequel son interface est insérée par une adresse informatique dite adresse MAC, qui est affectée de manière irréversible au routeur 1 en usine.

Le module de gestion 3 met en oeuvre un logiciel proposé par le constructeur avec un certain nombre d'options choisies par le client acheteur du routeur, en vue de l'adapter à son cas d'espèce. En général, un technicien intervient sur site pour installer le routeur, et aussi pour le configurer, c'est à dire installer les options logicielles achetées par le client, tester la bonne installation, et effectuer la mise en route du routeur.

En cas de modification de la configuration, par exemple pour l'augmentation de la taille du réseau ou pour la mise à jour du logiciel, l'intervention d'un technicien est nécessaire pour effectuer de nouveau les étapes décrites ci-dessus.

Dans le mode de réalisation préféré de l'invention, toutes les options logicielles sont chargées dans la mémoire du routeur en usine. Le routeur comporte en outre un lecteur 5 permettant de lire une carte à microprocesseur 6, comprenant des informations, implantées en usine, relatives aux options effectivement achetées par un client, en vue de paramétrer la configuration correspondante dans le routeur.

Un contrôleur de présence et d'activation 7 en communication avec le processeur 2 permet de déceler si la carte à microprocesseur 6 a été introduite dans le lecteur 5, et le cas échéant d'alimenter son microprocesseur en électricité.

Ce lecteur est géré par un pilote 8 qui organise le transfert de fichiers de la carte vers le module de gestion 3, et qui gère le dialogue entre le microprocesseur de la carte 6 et le processeur 2 du routeur 1.

La carte comprend un bloc de contrôle d'accès qui assure le contrôle et le transfert des données de la carte 6 vers le routeur 1. Ce bloc met en oeuvre des échanges dits de bas niveau, concernant l'identification de la carte.

Selon une réalisation préférée de l'invention, différentes cartes sont réalisées en usine selon différentes combinaisons d'option, sans identification. Lorsqu'un acheteur fait l'acquisition d'un routeur, la carte correspondant à la combinaison d'options choisie lui est remise en même temps que le routeur. Lors de la première introduction de la carte dans le lecteur du routeur, la première opération effectuée est alors d'inscrire de façon irréversible l'adresse MAC du routeur dans la carte afin d'empêcher un acquéreur peu scrupuleux d'utiliser la même carte pour configurer des routeurs différents. Lors des introductions ultérieures de la carte, par exemple pour une reconfiguration à la suite d'une panne, le pilote 8 du lecteur 5 du routeur vérifie que l'identification de la carte 6 est bien la même que celle du routeur.

La carte 6 comprend également un bloc de transfert de données 10 qui prend en charge des transferts de données ou de paramètres, pour assurer après identification de la carte 6 la configuration du routeur 1.

Lorsque la capacité de la carte 6 le permet, une configuration complète du routeur est effectuée au moyen des données transférées par la carte 6. Dans le cas contraire, une configuration partielle seulement est effectuée et cette configuration partielle comprend le transfert au routeur 1 d'une adresse informatique d'un gestionnaire de réseau permettant une mise en contact du routeur 1 avec le gestionnaire de réseau afin de faire le complément de configuration nécessaire depuis le gestionnaire de réseau. L'accès au gestionnaire de réseau peut également être utilisé pour redémarrer le routeur 1 en cas de panne, ou pour une mise à jour des logiciels contenus dans le routeur 1.

Dans le cas où l'utilisation des logiciels est limitée dans le temps, par exemple dans le cas d'une licence annuelle, la période d'autorisation d'utilisation est également incluse dans les paramètres de configuration contenus dans la carte 6.

Dans le cas ou l'acquéreur du routeur 1 veut changer la combinaison d'options logicielles à laquelle il a accès, il lui suffit de faire l'acquisition d'une nouvelle carte 6 conforme aux options choisies et d'introduire celle-ci dans le lecteur 5 du routeur 1 pour lancer une nouvelle configuration du routeur.

Selon un mode de réalisation préféré de l'invention, la configuration en cours du routeur 1, c'est à dire la configuration lors de la dernière mise sous tension, ou avant un éventuel incident, est mis en mémoire dans la carte 6, en vue de permettre un redémarrage direct du routeur 1, selon la configuration qui est stockée sur la carte 6.

Par ailleurs, on peut ajouter dans la carte des paramètres ne servant par directement au fonctionnement du routeur, mais qui permettent d'effectuer des contrôles d'accès aux informations contenues dans le routeur. Par exemple, différents intervenants sur le routeur (constructeur, distributeur, opérateur) peuvent être équipés d'une carte correspondant à leur fonction et leur laissant un accès limité à certains fichiers contenus dans le routeur.

L'invention n'est pas limitée au mode de réalisation particulier qui vient d'être décrit, mais englobe toute variante, qui avec des moyens équivalents, en reproduit les caractéristiques essentielles.

En particulier, l'identification de la carte peut être réalisée en usine simultanément à la réalisation du routeur en donnant à la carte une identification identique à l'adresse MAC du routeur. Il est alors nécessaire de connaître au moment de la fabrication de la carte les options retenues par l'acheteur du routeur.

En cas de panne, on peut également prévoir un redémarrage du routeur avec une configuration par défaut assurant les fonctions de base du routeur.

## Revendications

1. Routeur (1) comportant un processeur (2) destiné à assurer des transmissions sur un réseau de communications au moyen d'une interface (4) identifiée par une adresse affectée en usine, **caractérisé en ce qu'**il est équipé d'un lecteur (5) pour associer le routeur (1) à une carte à microprocesseur (6) identifiée par ladite adresse de l'interface du routeur inscrite dans la carte à microprocesseur (6), le routeur (1) étant adapté à être configuré par une procédure, lancée par la carte à microprocesseur (6), de mise en service en relation avec au moins un paramètre de configuration du routeur (1) contenu dans la carte à microprocesseur (6).

2. Routeur selon la revendication 1, **caractérisé en ce que** l'adresse du routeur (1) est inscrite de façon irréversible dans la mémoire de la carte à microprocesseur (6) lors de sa première introduction dans le lecteur (5) du routeur (1).

3. Routeur selon l'une des revendications précédentes, **caractérisé en ce que** la carte à microprocesseur (6) contient des procédures de test du routeur (1).

4. Routeur selon l'une des revendications précédentes, **caractérisé en ce que** la configuration active du routeur (1) est sauvegardée en mémoire dans la carte à microprocesseur (6).

5. Routeur selon l'une des revendications précédentes, **caractérisé en ce que** la carte à microprocesseur (6) contient une adresse d'accès à distance d'un gestionnaire de réseau.

6. Routeur selon l'une des revendications précédentes, **caractérisé en ce que** la carte à microprocesseur (6) contient des paramètres limitant l'accès à certains fichiers du routeur (1).

## Patentansprüche

1. Router (1), umfassend einen Prozessor (2), der dazu bestimmt ist, Übertragungen über ein Kommunikationsnetz mittels einer Schnittstelle (4) zu gewährleisten, die durch eine im Werk zugewiesene Adresse identifiziert wird, **dadurch gekennzeichnet, dass** er mit einem Lesegerät (5) ausgestattet ist, um den Router (1) mit einer Mikroprozessorkarte (6) zu verbinden, die über die genannte Adresse der Schnittstelle des Routers identifiziert wird, die in die Mikroprozessorkarte (6) eingeschrieben wird, wobei der Router (1) daran angepasst ist, durch ein von der Mikroprozessorkarte (6) gestartetes Verfahren zur Inbetriebnahme in Verbindung mit mindestens einem in der Mikroprozessorkarte (6) enthaltenen Konfigurationsparameter des Routers (1) konfiguriert zu werden.

2. Router nach Anspruch 1, **dadurch gekennzeichnet, dass** die Adresse des Routers (1) beim ersten Einführen der Mikroprozessorkarte (6) in das Lesegerät (5) des Routers (1) auf irreversible Weise in deren Speicher eingeschrieben wird.

3. Router nach einem der vorhergehenden Ansprüche, **dadurch gekennzeichnet, dass** die Mikroprozessorkarte (6) Prüfverfahren zum Prüfen des Routers (1) enthält.

4. Router nach einem der vorhergehenden Ansprüche, **dadurch gekennzeichnet, dass** die aktive Konfiguration des Routers (1) in der Mikroprozessorkarte (6) gespeichert wird.

5. Router nach einem der vorhergehenden Ansprüche, **dadurch gekennzeichnet**, das die Mikroprozessorkarte (6) eine Fernzugriffsadresse eines Netzbetreibers enthält.

6. Router nach einem der vorhergehenden Ansprüche, **dadurch gekennzeichnet, dass** die Mikroprozessorkarte (6) Parameter enthält, die den Zugriff zu bestimmten Dateien des Routers (1) beschränken.

## Claims

1. A router (1) including a processor (2) that is to transmit over a communications network by means of an interface (4) that is identified by an address allocated thereto on fabrication, the router being **characterized in that** it is fitted with a reader (5) for associating the router (1) with a microprocessor card (6) identified by said interface address of the router as written in the microprocessor card (6), the router (1) being adapted to be configured by a procedure that is launched by the microprocessor card (6) for putting it into service in association with at least one configuration parameter of the router (1) contained in the microprocessor card (6).

2. A router according to claim 1, **characterized in that** the address of the router (1) is written in irreversible manner in the memory of the microprocessor card (6) on the first occasion it is introduced into the reader (5) of the router (1).

3. A router according to either preceding claim, **characterized in that** the microprocessor card (6) contains test procedures of the router (1).

4. A router according to any preceding claim, **characterized in that** the active configuration of the router (1) is saved in memory in the microprocessor card (6).

5. A router according to any preceding claim, **characterized in that** the microprocessor card (6) contains an address for remotely accessing a network manager.

6. A router according to any preceding claim, **characterized in that** the microprocessor card (6) contains parameters limiting access to certain files of the router (1).
